# EUROPEAN PATENT APPLICATION

(11) **EP 4 083 631 A1**
(43) Date of publication of application: **02.11.2022**
(21) Application number: 20915753.6
(22) Date of filing: 15.04.2020
(51) Int. Cl.: G01N 35/00

(54) **DILUTION METHOD AND DILUTION APPARATUS**

(30) Priority: 21.01.2020 CN 202010069793
(71) Applicant: Shenzhen Increcare Biotech Co., Ltd, Shenzhen, Guangdong 518055 (CN)
(72) Inventor: ZHANG, Zhen, Shenzhen, Guangdong 518055 (CN); YU, Huaibo, Shenzhen, Guangdong 518055 (CN); HE, Taiyun, Shenzhen, Guangdong 518055 (CN); YAO, Yanyi, Shenzhen, Guangdong 518055 (CN); LIU, Qilin, Shenzhen, Guangdong 518055 (CN)
(74) Representative: Inchingalo, Simona
(86) International application number: PCT/CN2020/084945
(87) International publication number: WO 2021/147186

(57) **Abstract**

Disclosed are a dilution method and a dilution apparatus. The dilution method includes: adding a sample into a first reactor at a first station (11) of a supply unit (700); transferring the first reactor to a fifth station (15) of a transit apparatus (500), and receiving a second reactor at the first station (11) of the supply unit (700); adding a diluent into the first reactor at the fifth station (15) to obtain a diluted sample; uniformly mixing the diluted sample in the first reactor; transferring the first reactor from the transit apparatus (500) to a dilution transport apparatus (900); transferring part of the diluted sample in the first reactor to the second reactor; transferring the second reactor to the fifth station (15) of the transit apparatus (500), and continuing to add the diluent into the second reactor; and uniformly mixing substances in the second reactor. The dilution apparatus includes the supply unit (700) and the transit apparatus (500).

## Description

### Technical Field

The present invention relates to the technical field of analysis and testing, in particular to a dilution method and a dilution apparatus.

### Background

A chemiluminescence immunoassay system utilizes the principles of chemiluminescence and immunoreaction to associate an optical signal with the concentration of a to-be-measured substance and analyze the content of the to-be-measured substance in a sample. The chemiluminescence immunoassay system is increasingly widely applied due to its characteristics of high sensitivity and specificity, wide linear range, and the like. With the increase in the amount of test samples, a clinical laboratory has higher and higher requirements for the volume and test flux of the chemiluminescence immunoassay system. Moreover, the chemiluminescence immunoassay system needs to realize the functions of sample transportation, reagent storage, suction and discharge of a sample reagent and other analytical liquid, reactor transfer, cleaning and separation, and the like, and has very high requirements for automatic control.

Usually, for some specific test analysis, the sample needs to be diluted first before uniformly mixing the sample and the reagent. However, the dilution process takes a long time, so that the flow of the reactor in the dilution link is low, thereby becoming a bottleneck affecting the work efficiency and making the chemiluminescence immunoassay system difficult to meet the requirements for relatively high test flux.

### Summary

Based on this, it is necessary to provide a dilution method and a dilution apparatus for the above technical problems.

A dilution method includes the following operations.

A sample is added into a first reactor at a first station of a supply unit.

The first reactor is transferred to a fifth station of a transit apparatus, and a second reactor is received at the first station of the supply unit.

A diluent is added into the first reactor at the fifth station to obtain a diluted sample.

The diluted sample in the first reactor is uniformly mixed.

The first reactor is transferred from the transit apparatus to a dilution transport apparatus.

Part of the diluted sample in the first reactor on the dilution transport apparatus is transferred to the second reactor on the supply unit.

The second reactor is transferred to the fifth station of the transit apparatus, and the diluent is continued to be added into the second reactor.

A mixture in the second reactor is uniformly mixed.

In one of the embodiments, the supply unit includes a supply disc. A temporary storage tank configured to contain the reactor is formed in the supply disc. The supply disc rotates to drive the temporary storage tank to move circularly at the first station and the second station.

In one of the embodiments, the transit apparatus includes a transit disc. A temporary storage position configured to contain the reactor is arranged on the transit disc. The transit disc drives the temporary storage position to rotate circularly at the fourth station and the fifth station.

In one of the embodiments, the reactor receives the diluent at the fifth station, and performs a uniform mixing operation at the fifth station.

In one of the embodiments, the transit disc drives the temporary storage position to rotate circularly at the fourth station, the fifth station and a sixth station.

In one of the embodiments, the reactor receives the diluent at the fifth station and performs a uniform mixing operation at the sixth station.

In one of the embodiments, the dilution method may further include a step of discarding the first reactor after transferring part of the diluted sample in the first reactor to the second reactor.

A dilution apparatus includes a supply unit, a transit apparatus, a dilution transport apparatus and a sample supply apparatus.

The supply unit includes a supply disc. A temporary storage tank configured to contain a reactor is formed in the supply disc. The supply disc may rotate to drive the temporary storage tank to move circularly at a first station and a second station.

The transit apparatus includes a transit disc. A temporary storage position configured to contain the reactor is arranged on the transit disc. The transit disc may rotate to drive the temporary storage position to move circularly at a fourth station and a fifth station.

The dilution transport apparatus may be configured to transport the reactor after the diluted sample.

The sample supply apparatus may be configured to transfer the diluted sample in the reactor on the dilution transport apparatus to the reactor on the supply unit.

In one of the embodiments, the dilution apparatus may further include a transfer apparatus configured to transfer the reactor between the supply unit and the transit apparatus.

In one of the embodiments, the dilution apparatus may further include a reagent supply apparatus configured to add a diluent into the reactor.

In one of the embodiments, the transfer apparatus includes a guide rail and a grabbing unit moving along the guide rail.

In one of the embodiments, one guide rail is arranged. At least two groups of the grabbing units are arranged. The at least two groups of the grabbing units are sequentially arranged along the extension direction of the guide rail.

In one of the embodiments, the dilution apparatus may further include a reaction apparatus. The dilution transport apparatus is independently arranged between the reaction apparatus and the transit apparatus, and may move linearly between the transfer apparatus and the sample supply apparatus.

In one of the embodiments, the dilution transport apparatus is provided with at least two carrying positions configured to carry the reactor containing the diluted sample.

The present invention has the following beneficial effects: the dilution process is completed by adding the sample into the first reactor, adding the diluent, transferring part of the diluted sample to the second reactor after being uniformly mixed, and then injecting the diluent into the second reactor. Herein, the second reactor may be provided for the transit apparatus in the process of injecting the diluent into the first reactor instead of after the first dilution process is completed, so that the dilution time is shortened, and the work efficiency is improved. Furthermore, the dilution process may be completed through mutual cooperation of the dilution transport apparatus and the transit apparatus of the dilution apparatus, the dilution efficiency is high, the dilution apparatus is simple, and the production cost is reduced.

### Brief Description of the Drawings

Fig. 1 shows a schematic structural diagram of an analysis apparatus in an embodiment of the present invention.
Fig. 2 shows a flowchart of immunoassay in an embodiment of the present invention.
Fig. 3 shows a schematic structural diagram of a transit apparatus contained in an analysis apparatus in an embodiment of the present invention.
Fig. 4 shows a schematic structural diagram of a reaction position on a reaction apparatus in an embodiment of the present invention.
Fig. 5 shows a schematic structural diagram of a transfer apparatus in an embodiment of the present invention.
Fig. 6 shows a transfer trajectory diagram of a transfer apparatus in an embodiment of the present invention.
Fig. 7 shows a cycle length diagram of an analysis apparatus in an embodiment of the present invention.
Fig. 8 shows a schematic structural diagram of a dilution apparatus in an embodiment of the present invention.
Fig. 9 shows an execution action diagram of a grabbing unit in a certain cycle in an embodiment of the present invention.
Fig. 10 shows an execution action diagram of a grabbing unit of a transfer apparatus in a certain cycle in an embodiment of the present invention.
Fig. 11 shows an execution action diagram of an embodiment shown in Fig. 10 when a plurality of test items are performed in an embodiment of the present invention.

Reference signs are as follows: 11. First station; 12. Second station; 13. Third station; 14. Fourth station; 15. Fifth station; 16. Sixth station; 100. Reagent supply apparatus; 110. Reagent storage unit; 111. First reagent disc; 112. Second reagent disc; 120. Reagent discharge unit; 121. First reagent discharge element; 122. Second reagent discharge element; 200. Sample supply apparatus; 300. Reactor supply apparatus; 310. Stock bin structure; 320. Supply chute; 400. Reaction apparatus; 410. Reaction disc; 420. Reaction position; 421. Cleaning and separation position; 422. Incubation position; 423. Measurement position; 430. Measurement component; 500. Transit apparatus; 510. Transit driving part; 520. Transit disc; 530. Temporary storage position; 600. Transfer apparatus; 611. First grabbing unit; 612. Second grabbing unit; 621. First grabbing driving part; 622. Second grabbing driving part; 630. Guide rail; 631. Cleaning and separation alignment position; 632. Incubation alignment position; 633. Measurement alignment position; 634. Discard alignment position; 635. Relay alignment position; 636. Transit alignment position; 700. Supply unit; 710. Supply disc; 720. Temporary storage tank; 800. Uniform mixing unit; 810. Vibration part; 820. Vibration hole; 830. Uniform mixing driving part; 900. Dilution transport apparatus.

### Detailed Description of the Embodiments

In order to facilitate the understanding of the present present invention, the present present invention will be described more fully below with reference to the relevant drawings. The preferred embodiments of the present present invention are shown in the drawings. However, the present present invention may be implemented in various different forms and is not limited to the embodiments described herein. On the contrary, the purpose of providing these embodiments is to make the understanding of the present present invention more thorough and comprehensive.

It is to be noted that when an element is referred to as being "fixed to" another element, it may be directly on another element or there may also be a centered element. When an element is considered to be "connected" to another element, it may be directly connected to another element or there may also be a centered element at the same time. On the contrary, when an element is referred to as being "directly on" another element, there is no centered element. The terms "vertical", "horizontal", "left", "right" and similar expressions used herein are for illustrative purposes only.

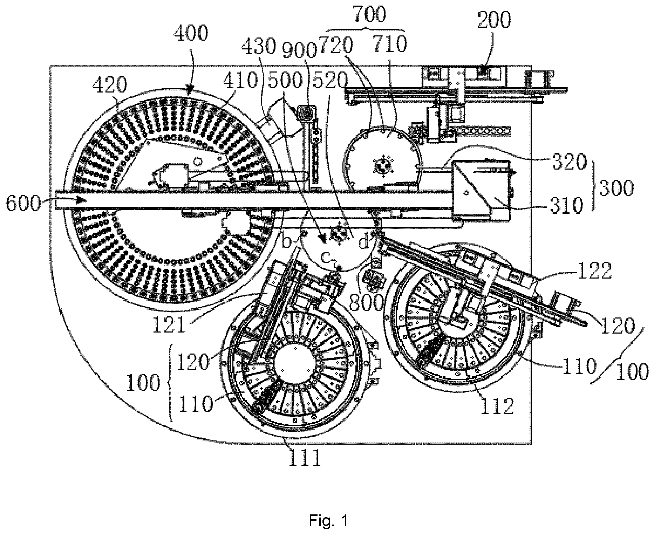

Fig. 1 shows a schematic structural diagram of an analysis apparatus in an embodiment of the present invention. The analysis apparatus includes a reagent supply apparatus 100, a sample supply apparatus 200, a reactor supply apparatus 300 and a reaction apparatus 400. During operation, a sample provided by the sample supply apparatus 200 is added into a reactor provided by the reactor supply apparatus 300, and a reagent provided by the reagent supply apparatus 100 is also added into the reactor provided by the reactor supply apparatus 300. At this time, the reactor contains a mixture of the sample and the reagent, and the mixture of the sample and the reagent is subsequently transferred to the reaction apparatus 400 for reaction. Since the functions and structures are similar, liquid is sucked and added into the reactor. The sample supply apparatus 200 and the reagent supply apparatus 100 may be combined into a supply apparatus or collectively referred to as a supply apparatus, that is, the supply apparatus includes the sample supply apparatus 200 and the reagent supply apparatus 100. As shown in Fig. 1, the sample supply apparatus 200, the reagent supply apparatus 100 and the reaction apparatus 400 are arranged around a transit apparatus 500, that is, the transit apparatus 500 is arranged in the middle position to achieve a reactor transit function. The transit apparatus 500 is arranged in the middle position, and the transit apparatus 500 is relatively close to other structures, so that the overall transfer time of the reactor may be shortened and the work efficiency may be improved. Further, in the top view direction, the sample supply apparatus 200, the reagent supply apparatus 100 and the reaction apparatus 400 are arranged on the outer periphery of the transit apparatus 500 in the counterclockwise direction, so that each mechanism may work orderly, the spatial interference may be reduced and the work efficiency may be improved.

Specifically, the reactor supply apparatus 300 may provide a clean and vacant reactor, and the sample supply apparatus 200 may add the sample into the vacant reactor. The analysis apparatus in one embodiment further includes a supply unit 700. The supply unit 700 is configured to carry the reactor provided by the reactor supply apparatus 300, and the sample supply apparatus 200 adds the sample into the vacant reactor on the supply unit 700. The analysis apparatus in one embodiment further includes a transit apparatus 500 and a transfer apparatus 600. The working path of the transfer apparatus 600 at least covers the supply unit 700, the transit apparatus 500 and the reaction apparatus 400. The transfer apparatus 600 transfers the sample-added reactor from the supply unit 700 to the transit apparatus 500, and receives the reagent provided by the reagent supply apparatus 100 in the transit apparatus 500, that is, the reagent supply apparatus 100 may add the reagent into the sample-added reactor on the transit apparatus 500. At this time, the reactor contains the mixture of the sample and the reagent. The transfer apparatus 600 is also configured to transfer the reactor containing the mixture of the sample and reagent into the reaction apparatus 400 for reaction. The reaction process includes one or more of incubation, cleaning and measurement.

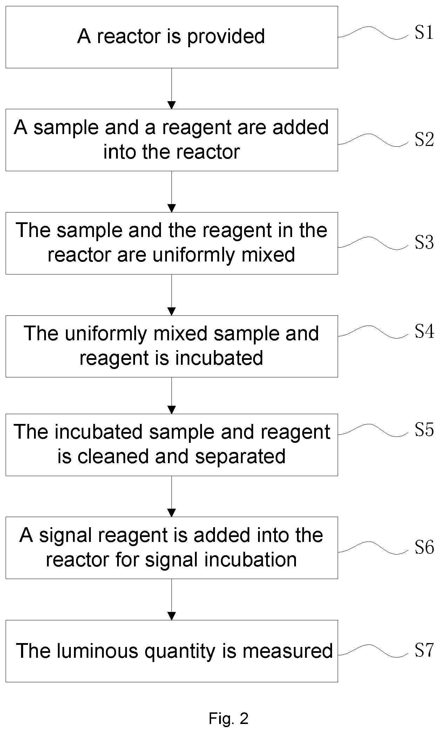

For example, the analysis apparatus may be an immunoassay apparatus, which is an apparatus configured to quantitatively or qualitatively measure a to-be-measured target substance, such as an antigen and an antibody contained in a blood sample. Taking a one-step method as an example, the overall operation of the immunoassay apparatus will be described. Fig. 2 is a flowchart of immunoassay in an embodiment, as shown in Fig. 2, the immunoassay as a whole completes the following steps.

At S1, the reactor is provided.

At S2, the sample and the reagent are added into the reactor.

At S3, the sample and the reagent in the reactor are uniformly mixed.

At S4, the uniformly mixed sample and reagent is incubated.

At S5, the incubated sample and reagent is cleaned and separated.

At S6, a signal reagent is added into the reactor for signal incubation.

At S7, the luminous quantity is measured.

Specifically, in S1, the reactor is first provided through the reactor supply apparatus 300.

In S2, the reagent and the sample into the reactor are respectively added into the reactor through the reagent supply apparatus 100 and the sample supply apparatus 200. The order of adding the reagent and the sample is not limited, the reagent and the sample may be sequentially added, or the sample and the reagent may be sequentially added. For example, the apparatus shown in Fig. 1 may first provide the sample through the sample supply apparatus 200, add the sample into the reactor, then provide the reagent through the reagent supply apparatus 100, and then add the reagent into the reactor. The sample may be the blood sample. According to the specific analysis items, the reagent usually includes a plurality of components, such as magnetic particles, an enzyme label, a diluent and a dissociation reagent. According to different reaction modes, the plurality of reagent components needed for one analysis item may be added into the reactor at one time, or may be added into the reactor in a plurality of steps.

In S3, the reactor is shaken to uniformly mix the reagent and the sample in the reactor. Of course, in some tests, the uniform mixing step is not needed, at this time, S3 may be skipped.

In S4, the mixture of the sample and the reagent in the reactor is incubated, and the incubation time is usually 5-60 minutes. Herein, incubation refers to the process of antigen-antibody binding reaction in a constant temperature environment, or the process of biotin-avidin binding reaction in a constant temperature environment.

In S5, cleaning and separation refers to the process of capturing the magnetic particles after binding reaction with magnetic force, and removing the unbound labeled antibody and other unreacted or bound components at the same time.

In S6, after cleaning and separation, the signal reagent is continued to be added into the reactor, and the signal incubation is performed for 1-6 minutes. Signal incubation refers to the process of adding the signal reagent into the reactor after cleaning and separation, and reacting in a constant temperature environment for a period of time to enhance the signal. Due to the different types of signal reagents, some luminescence systems do not needed signal incubation, and the measurement in S7 may be performed directly after adding the signal reagent. There may be one or more of signaling reagents. Some signaling reagents may further include a first component reagent and a second component reagent.

In S7, the signal reagent reacts with the original mixture in the reactor to generate the luminous quantity of a reactant. Herein, the signal reagent is usually one of general reagents. The general reagent refers to a signal reagent which may be commonly used in different analysis items. After the steps, the content of an analyte contained in the sample is quantitatively or qualitatively determined.

Taking the embodiment shown in Fig. 1 as an example, S1 is completed by the reactor supply apparatus 300. S2 is completed by the reagent supply apparatus 100, the sample supply apparatus 200, the supply unit 700 and the transit apparatus 500. S3 is completed by a uniform mixing unit 800. S4-S6 are completed by the reaction apparatus 400. A cleaning and separation component is provided.

The reactor supply apparatus 300 is configured to store and supply the reactor. The reactor supply apparatus 300 includes a tray structure or a stock bin structure 310. Herein, the tray structure is that the reactors are neatly arranged in a tray, and the stock bin structure 310 is that the reactors are scattered in a stock bin. Since the reactors in the tray structure are neatly arranged in the tray, the tray structure occupies a large space. In order to reduce the occupied volume of the reactor supply apparatus 300 and make the overall structure compact, the stock bin structure 310 is preferably adopted. In one of the embodiments, as shown in Fig. 1, the reactor supply apparatus 300 includes the stock bin structure 310, a sorting structure and a supply chute 320. The reactors are scattered in the stock bin structure 310, and the scattered reactors in the stock bin are sorted by the sorting structure, so that the reactors are discharged to the supply unit 700 one by one through the supply chute 320. The supply unit 700 is configured to buffer the reactor.

As shown in Fig. 1, in one of the embodiments, the supply unit 700 includes a supply disc 710 and a supply driving part configured to drive the supply disc 710 to rotate around a central axis of the supply disc 710. The outer periphery of the supply disc 710 is provided with a plurality of temporary storage tanks 720 configured to temporarily store the reactor, which are distributed at intervals in the circumferential direction. The supply driving part drives the supply disc 710 to rotate, so that the vacant temporary storage tank 720 is aligned with the supply chute 320 of the reactor supply apparatus 300. After the reactor is transferred from the supply chute 320 to the temporary storage tank 720, the supply driving part drives the supply disc 710 to rotate, so that the next vacant temporary storage tank 720 is aligned with the supply chute 320 of the reactor supply apparatus 300. Herein, at least three temporary storage tanks 720 are arranged. At a certain time, at least one temporary storage tank 720 is configured to receive the reactor provided by the reactor supply apparatus 300, the reactor in the at least one temporary storage tank 720 receives the sample provided by the sample supply apparatus 200, and the reactor in the at least one temporary storage tank 720 is transferred by the transfer apparatus 600 to the transit apparatus 500.

In one of the embodiments, as shown in Fig. 1, the analysis apparatus includes the supply unit 700, and the reactor supply apparatus 300, the sample supply apparatus 200 and the transit apparatus 500 which are arranged in the circumferential direction of the supply disc 710 of the supply unit 700. The analysis apparatus further includes the transfer apparatus 600 capable of transferring the reactor between the supply unit 700 and the transit apparatus 500. Herein, after the supply unit 700 receives the reactor provided by the reactor supply apparatus 300, the supply disc 710 rotates by an angle and receives the sample provided by the sample supply apparatus 200, so that the sample is added into the reactor. Then, the supply disc 710 continues to rotate, after the supply disc 710 rotates by a certain angle, the transfer apparatus 600 transfers the reactor containing the sample to the transit apparatus 500.

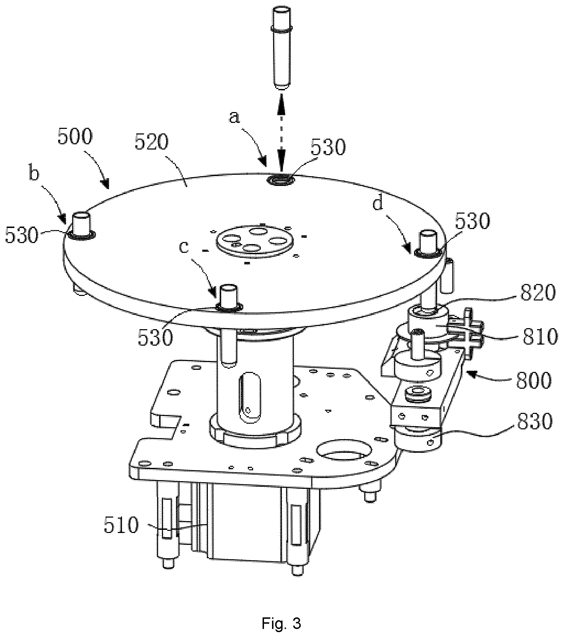

The transit apparatus 500 is configured to carry and transfer the reactor which needs to discharge the reagent. Further, the transit apparatus 500 is also configured to carry and transfer the reactor which needs to be uniformly mixed after discharging the reagent. Fig. 3 at least shows a schematic structural diagram of a transit apparatus 500 contained in the analysis apparatus. As shown in Fig. 3, the transit apparatus 500 includes a transit driving part 510 and a transit disc 520 connected to the transit driving part 510. The transit disc 520 is configured to carry the reactor, and the transit driving part 510 drives the transit disc 520 to rotate around the central axis of the transit disc 520, so as to move the reactor on the transit disc 520 to different positions. The outer periphery of the transit disc 520 is provided with a plurality of temporary storage positions 530 configured to temporarily store the reactor, which are distributed at intervals in the circumferential direction. The temporary storage position 530 here may be understood as a groove structure opened on the transit disc 520, and may also be understood as a clamp configured to clamp the reactor fixedly installed on the transit disc 520. In one of the embodiments, the plurality of temporary storage positions 530 are annularly distributed on the transit disc 520.

In one of the embodiments, at least four temporary storage positions 530 are arranged. At a certain time, the at least one temporary storage position 530 is configured to receive the reactor transferred by the transfer apparatus 600 from the supply unit 700, the reactor in the at least one temporary storage position 530 is configured to receive the reagent provided by the reagent supply apparatus 100, the reactor in the at least one temporary storage position 530 is configured to uniformly mix the reagent and the sample, and the reactor in the at least one temporary storage position 530 is transferred by the transfer apparatus 600 to the reaction apparatus 400. In one of the embodiments, as shown in Fig. 1, the analysis apparatus includes the transit apparatus 500, and the supply unit 700, the reagent supply apparatus 100 and the uniform mixing unit 800 which are arranged in the circumferential direction of the transit disc 520 of the transit apparatus 500. The analysis apparatus further includes the reaction apparatus 400 arranged on the outer periphery of the transit apparatus 500 and the transfer apparatus 600 capable of transferring the reactor between the transit apparatus 500 and the reaction apparatus 400. After the transit apparatus 500 receives the reactor containing the sample transferred by the transfer apparatus 600 from the supply unit 700, the transit disc 520 rotates by an angle and continues to receive the reagent provided by the reagent supply apparatus 100, so that the reagent is added into the reactor containing the sample. Then, the transit disc 520 continues to rotate, and the reagent and the sample in the reactor are uniformly mixed through the uniform mixing unit 800. Then, the transit disc 520 continues to rotate, and the transfer apparatus 600 transfers the uniformly mixed reactor to the reaction apparatus 400. In order to improve the work efficiency of the transit disc 520, a plurality of reactors may be temporarily stored on the transit disc 520, and the number of the temporary storage positions 530 on the transit disc 520 may be more than four. Meanwhile, in order to prevent the overall volume of the apparatus from being relatively large due to the relatively large size of the transit disc 520, at most eight temporary storage positions 530 are arranged on the transit disc 520.

In one of the embodiments, the number of the temporary storage positions 530 on the transit disc 520 is 3-8. If in one embodiment, the number of the temporary storage positions 530 on the transit disc 520 is smaller than three, it is difficult to process a plurality of tasks in parallel, such as parallel processing of receiving the reactor to enter and exit the transit disc 520, receiving the reagent provided by the reagent supply apparatus 100, and uniformly mixing the reagent and the sample in the reactor. If in one embodiment, the number of the temporary storage positions 530 in the transit disc 520 is too large, for example, more than 8, the transit disc 520 occupies a larger space volume, and the reactor stays in the transit disc 520 for a long time, which reduces the test efficiency.

In one of the embodiments, as shown in Fig. 3, the uniform mixing unit 800 is arranged below the transit disc 520, and the transit disc 520 rotates to make the reactor in the temporary storage position 530 on the transit disc 520 sequentially correspond to the uniform mixing unit 800. The uniform mixing unit 800 may vibrate the reactor to uniformly mix the reagent and the sample in the reactor. For example, a uniform mixing component includes a vibration part 810, a uniform mixing driving part 830 configured to drive the vibration part 810 to vibrate, and a lifting driving part, and a vibration hole 820 may be formed in the vibration part 810. The lifting driving part drives the vibration part 810 and drives the vibration part 810 to lift, so that the reactor may be inserted into the vibration hole 820, and the uniform mixing driving part 830 drives the vibration part 810 to eccentrically vibrate, so that the reagent and the sample in the reactor are uniformly mixed due to vibration.

In one of the embodiments, as shown in Fig. 3, when the transit disc 520 rotates, the temporary storage positions 530 on the transit disc 520 move synchronously with the transit disc 520, and each temporary storage position 530 may sequentially move to a position a, a position b, a position c and a position d. The position a may be a transit position where the reactor enters and exits the transit disc 520. The position d may be a uniform mixing position where the reactor uniformly mixes the sample and the reagent in the reactor. The position b may be a reagent discharge position where the reactor receives the reagent. The position c may also be a reagent discharge position. When the transit disc 520 is viewed from above, the position a, the position b, the position c and the position d are sequentially arranged in the clockwise direction. Herein, the reactor enters and exits the transit disc 520 at the position a, with reference to Fig. 1, the reagent supply apparatus 100 discharges the reagent to the reactor on the transit disc 520 at the position c, and the uniform mixing unit 800 uniformly mixes the reagent and the sample in the reactor at the position d. The plurality of reactors on the transit disc 520 may be taken away by the transfer apparatus 600 only when they sequentially move to the position a, that is, the transfer apparatus 600 only picks and places the reactor at the position a, which may shorten the length of the transfer trajectory of the transfer apparatus 600, and only one transfer apparatus 600 is needed to pick and place the reactor, so that the number of the transfer apparatuses 600 may also be reduced.

As shown in Fig. 1, the transfer trajectory of the transfer apparatus 600 passes through the position a. The circle center of the transit disc 520 and the position c are on the same side of the transfer trajectory of the transfer apparatus 600. This layout may reduce the space volume occupied by the transit disc 520 and avoid the spatial interference between the transfer apparatus 600 and the reagent supply apparatus 100.

As shown in Fig. 1, when the analysis apparatus includes two reagent supply apparatuses 100, the transit disc 520 may receive the reagents provided by the two reagent supply apparatuses 100 at the positions b and c respectively. In some embodiments, the transit disc 520 may also successively receive the reagents provided by the two reagent supply apparatuses 100 at the position c. Preferably, the transit disc 520 may also successively receive the reagents provided by the two reagent supply apparatuses 100 at the position c, which may further reduce the size of the transit disc 520 and the space occupied by the reagent supply apparatus 100, improve the flexibility and the efficiency of the reagent supply apparatus 100, and increase the processing task capacity per unit area of the transit apparatus 500 and the reagent supply apparatus 100.

As shown in Fig. 1, the reaction apparatus 400 and the transit disc 520 of the transit apparatus 500 are arranged independently, specifically, the transit apparatus 500 is arranged at the outer side of the reaction apparatus 400, and the rotating center of the transit apparatus 500 is arranged at the outer side of the reaction apparatus 400. That is, there is no spatial overlap between the transit apparatus 500 and the reaction apparatus 400 in the plan view direction. Further, the diameter of the transit disc 520 is smaller than that of the reagent disc. The problems of complex structure, high cost and large occupied area caused by the nested arrangement of the transit disc 520 and the reaction apparatus 400 are avoided, and the limitation of the reaction disc 410 of the reaction apparatus 400 to the structure, size and spatial position of the transit disc 520 and the distribution of the temporary storage position is also solved, so that the position of the transit disc 520 and the temporary storage positions thereon may be arranged more flexibly, efficiently and reasonably. Herein, the nested arrangement of the transit disc 520 and the reaction apparatus 400 means that the transit disc 520 and the reaction apparatus 400 are coaxially arranged, and the reaction apparatus 400 is nested in the transit disc 520. In one of the embodiments, as shown in Fig. 1, the reagent supply apparatus 100 includes a reagent storage unit 110 and a reagent discharge unit 120. The reagent storage unit 110 is configured to store the reagent, and the reagent discharge unit 120 is configured to suck and discharge the reagent stored in the reagent storage unit 110 to the reactor on the transit apparatus 500.

In some embodiments, the reagent storage unit 110 may be of a bin type structure, that is, a fixed reagent bin, or may be of a disc type structure as shown in Fig. 1, that is, a rotatable reagent disc, and the reagent disc is configured to store the reagent. Since the transit disc 520 is configured to temporarily transfer the reactor, and each reactor stays in the transit disc for a short time, but the reagent disc stores some reagents for a long time, in order to meet the requirements for reagent storage and ensure that the size of the whole machine is relatively small, the diameter of the transit disc 520 is arranged to be smaller than that of the reagent disc.

The reagent storage unit 110 shown in Fig. 1 will be described below as the disc type structure. The reagent storage unit 110 is provided with a plurality of reagent positions configured to place reagent containers. The disc type reagent storage unit 110 may be driven by a driving unit to rotate around the central axis of the reagent storage unit 110 under the control of a control center, so that the reagent positions on the reagent storage unit 110 may sequentially rotate to a position which may be acquired by the reagent discharge unit 120.

In one embodiment, if the reagent includes a magnetic particle reagent component, since the magnetic particle reagent component may settle naturally, the reagent storage unit 110 includes a uniform mixing structure, and the uniform mixing structure may make a magnetic particle reagent component container at the reagent position rotate or shake, so that the magnetic particle reagent component in the reagent container is uniformly mixed.

In one embodiment, the reagent storage unit 110 includes a refrigerator. When the reagent needs to be stored for a long time, the refrigerator may provide a stable low temperature environment for the reagent in the reagent container, so that the storage time of the reagent is prolonged.

In one embodiment, the reagent storage unit 110 includes a barcode scanner, and the barcode scanner is configured to identify the barcode information on the reagent container, so as to identify and distinguish the reagents of different analysis items. In order to make the structure of the whole machine compact and reduce the cost, the barcode scanner may adopt a fixed design, for example, the barcode scanner is fixed relative to the whole machine.

One reagent storage unit 110 is usually arranged in a conventional analysis apparatus. In order to increase the number of the reagent containers contained in the reagent storage unit 110, that is, the number of the reagent positions, the size of the reagent storage unit 110 needs to be increased. However, such a large-sized reagent storage unit 110 not only occupies a large space area, is inconvenient for the layout of the whole machine, and is not conducive to production and manufacturing, but also has very high requirements for motion control, that is, any reagent position is needed to be positioned to the position which may be acquired by the reagent discharge unit 120 in a very short time, so that the high-speed operation of the whole machine may not be realized.

Therefore, in one embodiment of the present invention, as shown in Fig. 1, the analysis apparatus at least includes two independently driven reagent supply apparatuses 100. The reagent storage units 110 in the two reagent supply apparatuses 100 are a first reagent disc 111 and a second reagent disc 112 respectively, and the first reagent disc 111 and the second reagent disc 112 are each driven to rotate by an independent driving unit. The two reagent supply apparatuses 100 are independently arranged and driven, so that the size of each reagent disc is small, the layout of the whole machine and the motion control of the reagent disc are facilitated, and the reagent storage quantity of the whole machine is effectively expanded. In addition, the reliability of the operation of the whole machine is also improved, and when one reagent supply apparatus 100 fails, the other reagent supply apparatus 100 may continue to be used.

In an application scenario, three Thyroid Stimulating Hormone (TSH) reagent containers each containing 100 tests need to be loaded, and the three TSH reagent containers may be loaded in the first reagent disc 111. The three TSH reagent containers may also be loaded on the second reagent disc 112. One TSH reagent container may also be loaded on the first reagent disc 111, and another two TSH reagent containers are loaded on the second reagent disc 112. One TSH reagent container may also be loaded on the second reagent disc 112, and another two TSH reagent containers are loaded on the first reagent disc 111. That is, the first reagent disc 111 and the second reagent disc 112 may respectively store reagent components needed for one test item. In this way, the two reagent discs may output the reagents alternately, so that the time occupied by taking the reagents is shortened and the work efficiency is improved.

In one of the embodiments, in order to fully consider the usage requirements, cost and layout, each reagent disc is provided with 15-50 reagent positions, for example, the first reagent disc 111 and the second reagent disc 112 are each provided with 25 reagent positions.

In one of the embodiments, as shown in Fig. 1, the reagent discharge unit 120 is configured to suck and discharge the reagent. For example, the reagent discharge unit 120 sucks the reagent from the reagent container in the reagent storage unit 110, and then discharges the reagent to the reactor in the transit apparatus 500. As shown in Fig. 1, in order to improve the suction and discharge efficiency of the reagent when the test flux is relatively high, the reagent discharge unit 120 and the reagent storage unit 110 are in one-to-one correspondence, and the two reagent discharge units 120 are also independently controlled, and independently and alternatively discharge the reagent into the reactor in the transit apparatus 500. When the test flux is not high, one reagent discharge unit 120 may also be arranged. Usually, the reagent discharge unit 120 includes a metal needle, a pipetting drive mechanism, a syringe or infusion pump, a valve, a fluid pipe, and the like. In order to complete the reagent suction and discharge actions, the reagent discharge unit 120 may perform horizontal motion and vertical motion. Horizontal motion usually has several motion forms such as rotation, X-direction and Y-direction, or a combination of several motion forms. As a preferred embodiment, the reagent discharge unit 120 may perform horizontal linear motion and vertical motion, and the horizontal linear motion trajectory is on a connecting line of the center of the reagent storage unit 110 and the position c of the transit disc 520. In particular, two reagent discharge units 120 and two reagent storage units 110 are arranged, and the reagent discharge units 120 are in one-to-one correspondence with the reagent storage units 110. The horizontal linear motion trajectories of the two reagent discharge units 120 intersect at the position c of the transit disc 520 along the radial direction of the respective reagent storage units 110. The two reagent discharge units 120 independently and alternately discharge the reagent into the reactor in the position c of the transit apparatus 500, which not only reduces the motion displacement of the reagent discharge unit 120 to the greatest extent, and improves the task processing efficiency, but also makes the layout of the whole machine more reasonable and compact, and reduces the spatial interference of various motion components.

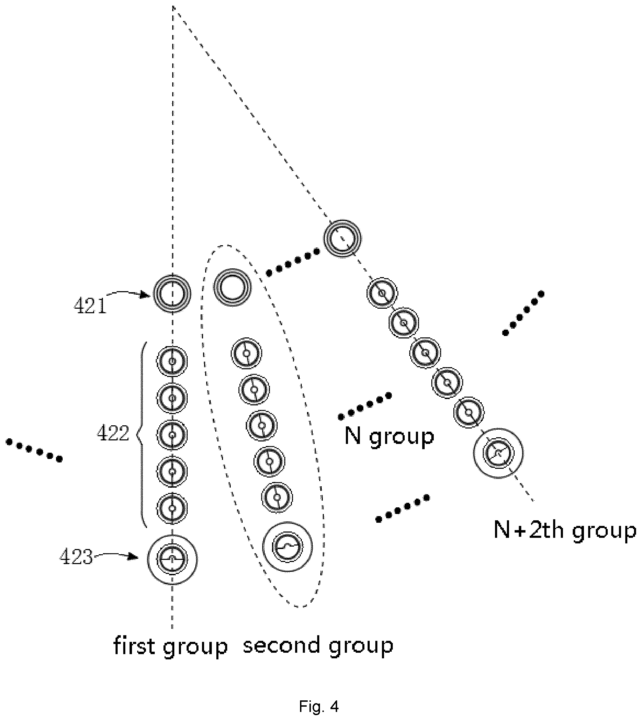

As shown in Fig. 1, the reaction apparatus 400 is configured to perform incubation, cleaning and separation, and measurement on the reactant in the reactor. The reaction apparatus 400 includes the reaction disc 410 and a reaction driving part configured to drive the reaction disc 410 to rotate around its central axis. A plurality of reaction positions 420 are arranged on the reaction disc 410, and the reaction positions 420 may be of a structure configured to fix the reactor, such as a hole, a groove, a bracket, or a base. As shown in Fig. 4, Fig. 4 is a schematic structural diagram of a reaction position 420 on a reaction apparatus 400 in an embodiment. The reaction positions 420 at least include a cleaning and separation position 421, an incubation position 422 and a measurement position 423. The reaction positions 420 are annularly arranged on the reaction disc 410, the inner circle is the cleaning and separation position 421, the outer circle is the measurement position 423, and a plurality of circles of innovation positions are arranged between the inner circle and the outer circle. The reactor arranged on the incubation position 422 performs the incubation process, the reactor arranged on the cleaning and separation position 421 performs the cleaning and separation process, and the reactor arranged on the measurement position 423 performs the measurement process or prepares for the measurement.

In one of the embodiments, as shown in Fig. 4, the reaction positions 420 on the reaction disc 410 are in a group along the radial direction of the reaction disc 410, and each group includes the cleaning and separation position 421, the incubation position 422 and the measurement position 423, and the plurality of groups are arranged along the circumferential direction of the reaction disc 410.

In one of the embodiments, with reference to Fig. 1, the transfer trajectory of the transfer apparatus 600 extends along the radius of the reaction disc 410, and at least covers all the reaction positions on the reaction disc 410 along the radial direction. Further, when the reaction disc 410 rotates in the circumferential direction, all the reaction positions 420 on the reaction disc 410 may be covered with the transfer trajectory of the transfer apparatus 600, so that the problem of taking and placing the reactors on the reaction positions 420 in different circles is realized, thereby making the whole machine compact in layout and small in occupied space.

In one of the embodiments, as shown in Fig. 1, the transit apparatus 500 includes the rotatable transit disc 520, and the circle center of the transit disc 520 and the circle center of the supply disc 710 are located on the two sides of the transfer trajectory of the transfer apparatus 600 respectively. Under this arrangement, the transit disc 520 and the supply disc 710 occupy the space on the two sides of the transfer apparatus 600 respectively, which not only shortens the motion displacement of the transfer apparatus 600, but also makes the whole machine compact and small in occupied space.

In one of the embodiments, as shown in Fig. 1, the reaction apparatus 400 includes a temperature control component, and the temperature control component includes a heat preservation pot, a heat insulation apparatus, a heater, a temperature sensor, a temperature control circuit and other elements to provide a constant temperature incubation environment for the reaction apparatus 400 and reduce heat loss.

In one of the embodiments, the reaction apparatus 400 further includes a cleaning and separation component. As shown in Fig. 4, when the reactor at the cleaning and separation position 421 is transferred to the position where the cleaning and separation component is located, the cleaning and separation component starts performing cleaning and separation on the reactor to remove unbound components in the reactant. The cleaning and separation components include a magnetic component and a flushing component. Herein, the magnetic component provides magnetic force, so that the magnetic particles in the reactor are collected to the inner wall of the reactor. Due to factors such as the response time, moving distance and resistance in the magnetic force, the collection of the magnetic particles to the inner wall of the reactor takes a certain amount of time, usually ranging from several seconds to tens of seconds, so that the reactor needs to be subjected to the magnetic force for a period of time before waste liquid (including the unbound components) is sucked each time. In this embodiment, the magnetic component may be directly installed or fixed near the cleaning and separation position 421, so that the magnetic component is closer to the reaction position 420, thereby reducing the collection time of the magnetic particles and improving the cleaning and separation efficiency. The flushing component is arranged above the cleaning and separation position 421. The flushing component includes a liquid suction needle and a pipette connected to the liquid suction needle. The liquid suction needle is driven by a liquid suction driving part to enter and exit the reactor at the cleaning and separation position 421, and the unbound components in the reactor are sucked. In one of the embodiments, the flushing component further includes a liquid injection needle and a liquid injection pipe connected to the liquid injection needle, and the liquid injection needle is configured to inject a cleaning buffer into the reactor.

Usually, the step of performing cleaning and separation each time includes a process of sucking the liquid once and injecting the cleaning buffer once, and generally, the cleaning and separation step is completed for three to four times. In one of the embodiments, in order to improve the effect of performing cleaning and separation on the reactor and reduce the reaction residues in the reactor, with reference to Fig. 4, a mixer may be arranged on the cleaning and separation position 421, and the mixer is configured to uniformly distribute the magnetic particles in the reactor again after the cleaning buffer is injected. The flushing component is arranged above the cleaning and separation position 421, and may directly perform cleaning and separation on the reactor at the cleaning and separation position 421, so that an independent cleaning and separation rotating apparatus is not needed, so as to prevent the reactor from being transferred between the independent cleaning and separation component and the reaction apparatus 400. The advantages of simple overall structure and efficient operation are provided.

In one of the embodiments, the reaction apparatus 400 further includes a measurement component 430, the measurement component 430 is arranged on the heat preservation pot, and measures the signal in the reactor at the measurement position 423. The signal is an electrical signal, a fluorescent signal, a weak chemiluminescence signal, or the like generated after adding the signal reagent into the reactor. In one of the embodiments, the measurement component 430 includes a weak light detector Photomultiplier Tube (PMT) or other sensitive photoelectric sensing devices, which may convert the measured optical signal into the electrical signal and transmit the electrical signal to the control center. In addition, in order to improve the measurement efficiency and ensure the measurement consistency, the measurement component 430 may further include optical structures such as optical signal collection and calibration. The measurement component 430 is connected or installed to the reaction apparatus 400 in a general manner, such as being directly fixed to the reaction apparatus 400 or connected and installed to the reaction apparatus 400 through an optical fiber, so that the reactor on the reaction position 420 in the outermost circle may be directly measured, thereby avoiding arranging an independent measurement unit, eliminating the transfer of the reactor between the reaction apparatus 400 and the measurement component 430, making the whole machine more compact, lower in cost, simpler and more efficient in the control process, and higher in processing efficiency and reliability.

In one of the embodiments, as shown in Fig. 1, the analysis apparatus includes the transfer apparatus 600, and the transfer apparatus 600 moves the reactor from a first position to a second position along a first direction. Herein, the first position is at least one of the supply unit 700, the transit apparatus 500 and the reaction apparatus 400, and the second position is at least one of the supply unit 700, the transit apparatus 500 and the reaction apparatus 400. In other embodiments, the first position may also be of a structure other than the supply unit 700, the transit apparatus 500 and the reaction apparatus 400, and the second position may also be of a structure other than the supply unit 700, the transit apparatus 500 and the reaction apparatus 400.

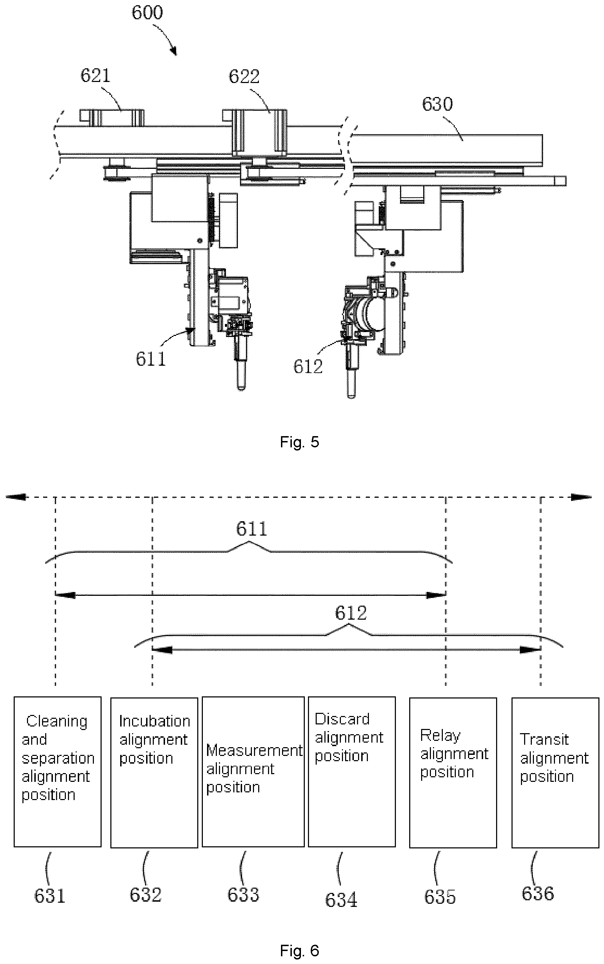

Fig. 5 is a schematic structural diagram of a transfer apparatus 600 in an embodiment. The transfer apparatus 600 includes a guide rail 630 and a grabbing unit moving along the guide rail 630. Herein, the space path through which the grabbing unit moves along the guide rail 630 is the transfer trajectory of the transfer apparatus 600. The number of the grabbing units may be selected according to the actual situation. In order to improve the comprehensive working capability of the transfer apparatus 600, preferably, at least two grabbing units, namely a first grabbing unit 611 and a second grabbing unit 612, are arranged. As shown in Fig. 5, one guide rail 630 of the transfer apparatus 600 is arranged, and the guide rail 630 of the transfer apparatus 600 is provided with the first grabbing unit 611, a first grabbing driving part configured to drive the first grabbing unit 611 to slide along the guide rail 630, a second grabbing unit 612, and a second grabbing driving part 622 configured to drive the second grabbing unit 612 to slide along the guide rail 630. The first driving part and the second driving part are independently arranged, so that the motion of the first grabbing unit 611 is independent of the motion of the second grabbing unit 612. Herein, the guide rail 630 may extend along a first direction, and the first direction generally extends along a horizontal direction. The first grabbing unit 611 and the second grabbing unit 612 are sequentially arranged along the extending direction of the guide rail 630. In this way, only one guide rail 630 is needed for the motion of the two grabbing parts, and the transfer trajectory of the transfer apparatus 600 is on a straight line, so that the number of the guide rails is reduced, the spatial layout of the whole machine is facilitated, the spatial interference of the plurality of transfer apparatuses is prevented, and the problem of large occupied space in order to avoid the interference is solved. Therefore, under the condition that the device flux is improved, the size of a device is reduced, and the device is more miniaturized. Further, since the motion trajectory of the transfer apparatus is on the straight line, transfer operations of the grabbing unit are all completed on the straight trajectory, so that the total stroke of the transfer operation is shortened, and the transfer operation efficiency of the transfer apparatus is improved. In conventional implementation modes, a corresponding transfer apparatus is usually arranged for each transfer operation, or one transfer apparatus is shared by 1-2 transfer operations. Since the transfer operations are usually more and are not on the same trajectory, the number and space dispersion distribution of the transfer apparatuses are increased through the arrangement modes, for example, more than three transfer apparatuses in a dispersed layout are needed to achieve high-flux testing, which not only makes the whole machine complex in structure and large in size, but also is inconvenient to control. In the embodiments of the present invention, all transfer operations may be completed by only arranging one transfer apparatus, so that the cost of the apparatus is greatly saved, the apparatus is compact in structure and convenient to control, and the interference of different transfer apparatuses in time and space is avoided.

In one of the embodiments, as shown in Fig. 5, the first grabbing unit 611 and the second grabbing unit 612 of the grabbing unit have the same structure, and each includes a frame body, a lifting block and a clamping jaw. The frame body is slidably connected to the guide rail 630, for example, the frame body may slide relative to the guide rail 630 along the horizontal direction, the lifting block is slidably connected to the frame body along the vertical direction, the clamping jaw is arranged on the lifting block, and the clamping jaw may lift with the lifting block to clamp the reactor.

Fig. 6 is a transfer trajectory diagram of a transfer apparatus 600 in an embodiment. The analysis apparatus includes the transfer apparatus 600, and the transfer apparatus 600 includes the first grabbing part 611 and the second grabbing part 612. The straight lines where the motion trajectories of the first grabbing unit (611) and the second grabbing unit (612) are located are coincident. The grabbing unit of the transfer apparatus 600 moves along the guide rail 630 to pick and place the reactor at a cleaning and separation alignment position 631, an incubation alignment position 632, a measurement alignment position 633, a discard alignment position 634, a relay alignment position 635, and a transit alignment position 636. With reference to the embodiment shown in Fig. 1, the reaction position 420 on the reaction apparatus 400 at least includes the cleaning and separation position 421, the incubation position 422 and the measurement position 423. When the cleaning and separation position 421 corresponds to the cleaning and separation alignment position 631 of the transfer apparatus 600, the grabbing unit may pick and place the reactor at the cleaning and separation position 421. When the incubation position 422 corresponds to the incubation alignment position 632 of the transfer apparatus 600, the grabbing unit may pick and place the reactor at the incubation position 422. When the measurement position 423 corresponds to the measurement alignment position 633 of the transfer apparatus 600, the grabbing part may pick and place the reactor at the measurement position 423. With reference to the embodiment shown in Fig. 3, the temporary storage position 530 on the transit apparatus 500 may at least move to the position a, the position a may be the transit position, and when the transit position corresponds to the transit alignment position 636, the grabbing part may pick and place the reactor at the transit position. As shown in Fig. 1, a relay position may be arranged between the transit apparatus 500 and the reaction apparatus 400, and the relay position may correspond to the relay alignment position 635. The first grabbing unit 611 may grab the reactor at the cleaning and separation alignment position 631, and place the reactor on the relay position at the relay alignment position 635, then the second grabbing unit 612 grabs the reactor on the relay position at the relay alignment position 635, and then moves the reactor to the transfer alignment position 636. With reference to the embodiment shown in Fig. 3, the temporary storage position 530 on the transit apparatus 500 may move to the position b, the position c and the position d. The position d may be a uniform mixing position, the position b may be a reagent discharge position, and the position c may also be a reagent discharge position. With reference to the embodiment shown in Fig. 1, a discard position may be arranged between the reaction apparatus 400 and the transit apparatus 500. When the discard position corresponds to the discard alignment position 634, the grabbing unit may pick and place the reactor at the discard position, or the grabbing unit may discard the reactor to the discard position.

In one of the embodiments, with reference to Fig. 6, the straight lines where the motion trajectories of the first grabbing part (611) and the second grabbing part (612) are located are coincident, and the transfer trajectories of the first grabbing unit 611 and the second grabbing unit 612 are at least partially overlapped. For example, in Fig. 6, the motion trajectories of the first grabbing unit 611 and the second grabbing unit 612 are overlapped at the incubation alignment position 632, the measurement alignment position 633, the discard alignment position 634 and the relay alignment position 635. For example, the first grabbing unit 611 may grab the reactor from the cleaning and separation alignment position 631, and then place the reactor at the relay alignment position 635, and the second grabbing unit 612 may move the reactor placed in the relay alignment position 635 to the transfer alignment position 636. With reference to Fig. 6, the cleaning and separation alignment position 631, the incubation alignment position 632, the measurement alignment position 633, the discard alignment position 634, the relay alignment position 635 and the transit alignment position 636 are not necessarily arranged in order shown in Fig. 6 and may be rearranged as needed.

As shown in Fig. 1, when the analysis apparatus works, each sub-apparatus works orderly according to the work cycle. The work cycle, or simply the cycle, is the shortest time interval that may be reproduced cyclically in the working process of an execution object, which usually has a fixed time length, for example, a suction and discharge step, a uniform mixing step, a cleaning and separation step and a measurement step take time when executed, and are executed serially or in parallel in a controlled order. The specific meaning of parallelism is that a plurality of task operations may be performed at the same time, and may also be that when the previous task operation has already started and has not ended, the subsequent task operation may be started. Since the same part may usually only execute one task at a time, the same part usually serially executes the actions or tasks in a cycle. Different parts may usually execute the tasks at the same time, so that different parts may usually execute the actions or tasks in parallel in the same cycle.

In order to improve the work efficiency, an apparatus with a speed bottleneck may be achieved by increasing the number of the apparatuses. For example, in Fig. 1, the two reagent discs, namely the first reagent disc 111 and the second reagent disc 112, are arranged. For another example, it may also be achieved by extending the work cycle of the apparatus. When there is only one reagent disc, the work cycle length needed by one reagent disc may be twice the work cycle length of the two reagent discs working together.

In one of the embodiments, as shown in Fig. 1, the analysis apparatus includes two groups of reagent supply apparatuses 100, one transit apparatus 500 and one transfer apparatus 600. One group of reagent supply apparatuses 100 includes the first reagent disc 111 and a first reagent discharge element 121, and the other group of reagent supply apparatuses 100 includes the second reagent disc 112 and a second reagent discharge element 122. Herein, the first reagent discharge element 121 and the second reagent discharge element 122 are reagent discharge units 120.

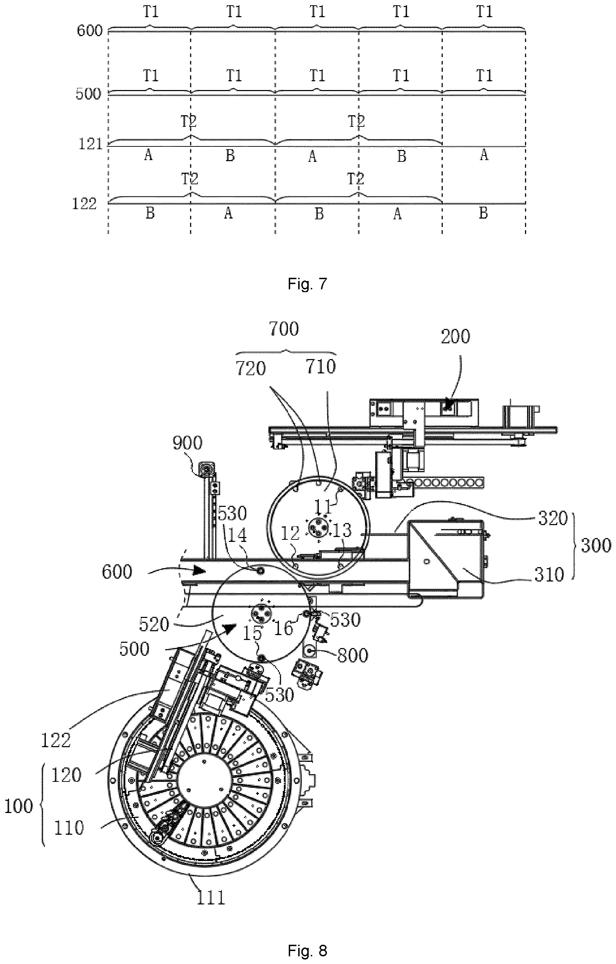

As shown in Fig. 7, Fig. 7 is a cycle length diagram of an analysis apparatus in an embodiment of the present invention. The transit apparatus 500 and the transfer apparatus 600 work in a first cycle T1, the first reagent discharge element 121 and the second reagent discharge element 122 work in a second cycle T2, and the time length of the second cycle T2 is twice the time length of the first cycle T1. The first reagent discharge element 121 and the second reagent discharge element 122 working in the second cycle T2 alternately discharge the reagent to the reactor at the same temporary storage position 530 of the transit apparatus 500 by staggering the time length of the first cycle T1. As shown in Fig. 7, when the continuous operation starts, the transfer apparatus 600 move one reactor to the transit apparatus 500 every first cycle T1. The transit apparatus 500 drives the reactor to rotate and advance by one position every first cycle T1. The first reagent discharge element 121 sucks the reagent from the first reagent disc 111 and discharges the reagent to the reactor on the transit apparatus 500 every second cycle T2. For example, for the convenience of understanding, the sucked reagent corresponds to a section A of the second cycle T2, and the discharged reagent corresponds to a section B of the second cycle T2. The second reagent discharge element 122 sucks the reagent from the second reagent disc 112 and discharges the reagent to the reactor on the transit apparatus 500 every second cycle T2. Similarly, the sucked reagent corresponds to the section A of the second cycle T2, and the discharged reagent corresponds to the section B of the second cycle T2. The same action sequences of the first reagent discharge element 121 and the second reagent discharge element 122 are staggered by one first cycle T1, that is, when the first reagent discharge element 121 sucks the reagent, the second reagent discharge element 122 discharges the reagent; and when the first reagent discharge element 121 discharges the reagent, the second reagent discharge element 122 sucks the reagent. Specifically, the first reagent discharge element 121 and the second reagent discharge element 122 may discharge the reagent to the reactor at the same position of the transit apparatus 500. That is, the transit apparatus 500 transfers one of the reactors to a specific position in the Nth first cycles to receive the reagent discharged by the first reagent discharge element 121, and the transit apparatus 500 transfers the other reactor to the specific position in the N+1 first cycles and receives the reagent discharged by the second reagent discharge element 122. As shown in Fig. 1, the specific position may be the position c. In Fig. 1, the motion trajectories of the first reagent discharge element 121 and the second reagent discharge element 122 may both cover the position c, that is, they are overlapped or intersect at the position c, so that the area covered by the first reagent discharge element 121 and the second reagent discharge element 121 is small through this arrangement, which makes the whole machine more compact in structure. In the above embodiments, the work cycle of the reagent storage unit 110 is the same as that of the first reagent discharge element 121 and the second reagent discharge element 122, and is twice the work cycle of the transit apparatus 500 and the transfer apparatus 600. The action sequences of the two groups of reagent storage units are staggered in parallel, and separated by the first cycle T1. In this way, the analysis apparatus only includes two groups of reagent storage units 110, one group of transfer apparatuses 500 and one group of transfer apparatuses 600, which not only reduces the occupied space of the apparatus, but also effectively improves the work efficiency of the analysis apparatus.

An embodiment of the present invention further provides a dilution apparatus, as shown in Fig. 8, and Fig. 8 a schematic structural diagram of a dilution apparatus in an embodiment. The dilution apparatus includes a reagent supply apparatus 100, a sample supply apparatus 200, a reactor supply apparatus 300, a transit apparatus 500, a transfer apparatus 600, a supply unit 700 and a dilution transport apparatus 900. Herein, the reagent supply apparatus 100, the sample supply apparatus 200, the reactor supply apparatus 300, the transit apparatus 500, the transfer apparatus 600 and the supply unit 700 have the same structures as those in the above embodiments. The dilution transport apparatus 900 is arranged between the reaction apparatus 400 and the transit apparatus 500. The transport distance of the reactor containing a diluted sample may be reduced. The dilution transport apparatus 900 is provided with at least one carrying position configured to carry a reactor containing the diluted sample, which may move linearly back and forth between the motion trajectories of the transfer apparatus 600 and the sample supply apparatus 200. Preferably, the dilution transport apparatus 900 is provided with at least two carrying position configured to carry the reactor containing the diluted sample, which may be used alternately to improve the efficiency of automatic sample dilution.

As shown in Fig. 8, the supply unit 700 of the dilution apparatus is provided with a first station 11 and a second station 12. The first station 11 is configured to receive a sample by a first reactor and receive the diluted sample by a second reactor. The second station 12 is configured to transfer the first reactor and the second reactor out of the supply unit 700 by the transfer apparatus 600. The transit apparatus 500 is provided with a fourth station 14, a fifth station 15 and a sixth station 16. The fourth station 14 is configured to move the first reactor and the second reactor in and out of the transit apparatus 500 by the transfer apparatus 600, and the fifth station 15 is configured to receive a diluent by the first reactor and receive the reagent by the second reactor. The station 16 is configured to uniformly mix reactants in the first reactor and the second reactor respectively.

As shown in Fig. 8, the supply unit 700 includes a supply disc 710. The supply disc 710 is provided with a temporary storage tank 720 configured to contain the reactor. The supply disc 710 may rotate to drive the temporary storage tank 720 to move circularly at the first station 11 and the second station 12. The transit apparatus 500 includes a transit disc 520. The transit disc 520 is provided with a temporary storage position 530 configured to contain the reactor. The transit disc 520 may rotate to drive the temporary storage position 530 to move circularly at the fourth station 14, the fifth station 15 and the sixth station 16. Specifically, the transfer apparatus 600 is configured to transfer the reactor between the supply unit 700 and the transit apparatus 500, and the transfer apparatus 600 may also transfer the reactor between the transit apparatus 500 and the dilution transport apparatus 900. The reagent supply apparatus 100 is configured to add the diluent into the reactor. The sample supply apparatus 200 is not only configured to discharge the sample, but also configured to transfer the diluted sample between different reactors. For example, the sample supply apparatus 200 includes a movable suction needle, through which the sample may be sucked and discharged, and the diluted sample may also be sucked and discharged. A diluent for an item may be a component of the reagent of the item, or may be a general diluent. The diluent is stored in the reagent supply apparatus 100.

A dilution method, which may be completed by the dilution apparatus, is also completed by the analysis apparatus in the above embodiments. The dilution method includes the following steps.

At S101, a sample is added into a first reactor at a first station 11 of a supply unit 700.

The first reactor may be first provided for the supply unit 700 through a reactor supply apparatus 300, and then the first reactor may be moved to the first station 11 of the supply unit 700. The sample may be added into the first reactor of the first station 11 through the sample supply apparatus 200.

At S102, the first reactor is transferred to a fifth station 15 of a transit apparatus 500, and a second reactor at the first station 11 of the supply unit 700 is received.

The supply unit 700 rotates to rotate the first reactor out of the first station 11, and the supply unit 700 rotates to drive the second reactor to enter the first station 11. The reactor on the supply unit 700 may be transferred to the transit apparatus 500 through a transfer apparatus 600, and the transit apparatus 500 rotates to transfer the first reactor to the fifth station 15.

At S103, a diluent is added into the first reactor at the fifth station 15 to obtain a diluted sample The diluted sample may be obtained by adding the diluent into the first reactor at the fifth station 15 through the reagent supply apparatus 100.

At S104, the diluted sample in the first reactor is uniformly mixed.

A uniform mixing unit 800 may be arranged to uniformly mix the diluted sample in the first reactor located at the fifth station 15. The transit apparatus 500 may also be rotated to move the first reactor to other stations for uniform mixing.

At S105, the first reactor is transferred from the transit apparatus 500 to a dilution transport apparatus 900.

The first reactor is transferred from the transit apparatus 500 to the dilution transport apparatus 900 through the transfer apparatus 600.

At S106, part of the diluted sample in the first reactor is transferred to the second reactor

Part of the diluted sample in the first reactor on the dilution transport apparatus 900 is sucked through the sample supply apparatus 200, and then is discharged to the second reactor on the transit apparatus 500.

At S107, the second reactor is transferred to the fifth station 15 of the transit apparatus 500, and a reagent is continued to be added into the second reactor

The second reactor may be transferred to the fifth station 15 of the transit apparatus 500 through the transfer apparatus 600, and the reagent is continued to be added into the second reactor.

At S108, substances in the second reactor are mixed.

The mixture in the second reactor located at the fifth station 15 may be mixed. The transit apparatus 500 may also be rotated to move the second reactor to other stations for uniform mixing.

In the above embodiment, the diluted reactor is temporarily stored in the dilution transport apparatus 900, and then the mixture in the reactor on the dilution transport apparatus 900 is transferred into the reactor on the supply unit 700 through the sample supply apparatus 200. Therefore, the diluted reactor does not need to be temporarily stored back to the supply unit 700, which may effectively reduce the workload of the supply unit 700 and improve the operation efficiency and operation stability of the whole apparatus. Further, the dilution transport apparatus 900 is independently arranged between the reaction apparatus 400 and the transit apparatus 500, only carries the transport of the reactor containing the diluted sample, and moves linearly between the trajectories of the transfer apparatus 600 and the sample supply apparatus 200, which is not limited by other dilution processes and operations such as sample addition, reagent addition, and uniform mixing, and may maximize the efficiency of automatic sample dilution of the dilution apparatus.

In some embodiments, the supply disc 710 rotates to drive the temporary storage tank 720 to move circularly at the first station 11 and the second station 12. The transit disc 520 drives the temporary storage position 530 to rotate cyclically at the fourth station 14 and the fifth station 15. The supply disc 710 and the transit disc 520 cooperate to rotate, and the reactor is transferred orderly, so that the work efficiency is improved.

In one of the embodiments, the reactor may receive the diluent or reagent at the fifth station 15 and perform a uniform mixing operation at the fifth station 15. In one of the embodiments, the reactor receives the diluent or reagent at the fifth station 15 and performs a uniform mixing operation at the sixth station 16.

In one of the embodiments, the dilution method further includes a step of discarding the first reactor after transferring part of the diluted sample in the first reactor to the second reactor.

In one of the embodiments, a sample analysis method is provided, which includes the following steps.

At S210, a sample and a first reagent are added into a reactor and are uniformly mixed.

At S220, the reactor containing the sample and the first reagent performs primary incubation at an incubation position 422 of a reaction disc 410.

At S230, the reactor after primary incubation is transferred to a cleaning and separation position 421 of the reaction disc 410 to perform primary cleaning and separation.

At S240, the reactor is transferred to a transit disc 520, and a second reagent is added and uniformly mixed.

At S250, the reactor into which the second reagent is added is transferred to the incubation position 422 of the reaction disc 410 to perform secondary incubation.

At S260, the reactor after secondary incubation is transferred to the cleaning and separation position 421 of the reaction disc 410 for secondary cleaning and separation.

At S270, a signal reagent is added into the reactor.

At S280, the reactor into which the signal reagent is added is transferred to a measurement position 423 of the reaction disc 410 for measurement.

In one of the embodiments, the sample analysis method further includes a step of transferring the measured reactor to a discard position to discard the reactor.

Specifically, S210 further includes the following steps.

At S211, the reactor is provided, and the sample is added into the reactor.

At S212, the reactor containing the sample is transferred to the transit disc 520, and the first reagent is added.

At S213, the reactor is shaken to uniformly mix the sample and the first reagent in the reactor.

Specifically, S220 further includes the following steps.

At S221, the uniformly mixed reactor containing the sample and the first reagent is transferred from the transit disc 520 to the incubation position 422 of the reaction disc 410.

At S222, the reactor containing the sample and the first reagent rotates with the reaction disc 410 and performs primary incubation. The incubation time may be set according to a specific test item, and is generally 3 minutes to 60 minutes.

In S230, the reactor rotates with the reaction disc 410, and a cleaning and separation component performs primary cleaning and separation on the reactor.

In one of the embodiments, a sample analysis apparatus is provided, which may complete the above sample analysis method. As shown in Fig. 1, the sample analysis apparatus at least includes a supply apparatus, a uniform mixing unit 800, a reaction apparatus 400, a transfer apparatus 600, a cleaning and separation apparatus and a signal reagent adding component. The supply apparatus includes a sample supply apparatus 200 and a reagent supply apparatus 100. Herein, the sample supply apparatus 200 in the supply apparatus is configured to add the sample into the reactor, and the reagent supply apparatus 100 is configured to add the reagent into the reactor. The following embodiments describe the steps of completing the sample analysis method by the sample analysis apparatus.

In S210, the reactor is provided for the supply disc 710 through the reactor supply apparatus 300, and the supply disc 710 may rotate around the center of the supply disc 710. When the reactor rotates to a station corresponding to the sample supply apparatus 200, the sample supply apparatus 200 provides the sample in the reactor, and when the supply disc 710 rotates the reactor to the working range of the transfer apparatus 600, the transfer apparatus 600 transfers the reactor from the supply disc 710 to the transit disc 520. The transit disc 520 is provided with a temporary storage position 530 configured to carry the reactor, and the transit disc 520 may also rotate around the central axis of the transit disc 520. The transit disc 520 rotates the reactor to the position corresponding to the reagent supply apparatus 100, and the first reagent is supplied into the reactor through the reagent supply apparatus 100. The transit disc 520 rotates the reactor to the position of the uniform mixing unit 800, and the uniform mixing unit 800 uniformly mixes the sample in the reactor with the first reagent. Then, the transit disc 520 rotates the reactor to the working range of the transfer apparatus 600, and the reactor is transferred to the reaction apparatus 400 through the transfer apparatus 600.

In S220, the reaction apparatus 400 includes the reaction disc 410, the reaction disc 410 is provided with a reaction position 420 configured to carry the reactor, and the reaction position 420 is annularly arranged on the reaction disc 410. The reaction position 420 may be classified into the incubation position 422 configured to incubate, the cleaning and separation position 421 configured to clean and separate, and the measurement position 423 configured to measure according to different functions of the reaction position 420. The transfer apparatus 600 may transfer the reactor among the incubation position 422, the cleaning and separation position 421 and the measurement position 423. During primary incubation, the reactor performs primary incubation at the incubation position 422.

In S230, the reaction apparatus 400 includes a cleaning and separation component. After primary incubation, the reactor is transferred from the incubation position 422 to the cleaning and separation position 421 through the transfer apparatus 600. The cleaning and separation component performs primary cleaning and separation on the reactor at the cleaning and separation position 421.

In S240, the transfer apparatus 600 transfers the reactor to the transit disc 520, and the transit disc 520 rotates the reactor to a station corresponding to the reagent supply apparatus 100, and adds the second reagent into the reactor through the reagent supply apparatus 100. The transit disc 520 continues to rotate the reactor to a position corresponding to the uniform mixing unit 800, and the uniform mixing unit 800 uniformly mixes the mixture in the reactor. The transit disc 520 continues to rotate the reactor into the working range of the transfer apparatus 600.

In S250, the transfer apparatus 600 transfers the reactor into which the second reagent is added to the incubation position 422 of the reactor to perform secondary incubation.

In S260, the transfer apparatus 600 transfers the reactor after secondary incubation to the cleaning and separation position 421 of the reaction disc 410 to perform secondary cleaning and separation through the cleaning and separation component.

In S270, the reaction apparatus 400 includes a signal reagent adding component, and a signal reagent is added into the reactor through the signal reagent adding component.

In S280, the reactor is transferred to the measurement position 423 through the transfer apparatus 600 for measurement.

In some embodiments, the reactor after measurement is transferred to the discard position through the transfer apparatus 600 to discard the reactor.

In the sample analysis method in the above embodiment, the reactor needs to be transferred multiple times. The above sample analysis method may be realized in the sample analysis apparatus. When the sample analysis apparatus performs sample analysis, a plurality of groups of tests may be performed and all need the transfer of the reactor. In order to improve the work efficiency and make the sample analysis apparatus make full use of the working time, a reactor transfer method is provided.

The transfer apparatus completes at least 5 transfer operations, and each transfer operation transfers one reactor between two different operation stations. There are at least two mutually exclusive transfer operations in the transfer operations, and the mutually exclusive transfer operations do not exist simultaneously in the same work cycle, and the beats in different work cycles are overlapped.

The beat is the time period taken during the work cycle for each transfer operation to perform. The length of each beat may be the same or different. A plurality of beats in one cycle may be continuous or spaced, and the order of the plurality of beats is fixed. If the transfer operation corresponding to a certain beat does not exist in a certain work cycle, the beat is idle. Beat overlap refers to at least partial overlap of the time periods in the cycles occupied by performing the transfer operations in different work cycles, which may be overlap of partial execution time periods, or complete overlap.

The operation station at least includes a supply alignment position configured to remove the vacant reactor or the sample-added reactor, a transit alignment position configured to move the reactor into which the reagent needs to be added in or remove the reactor which has finished adding the reagent, an incubation alignment position configured to move the reactor which needs to be incubated or remove the reactor which has been incubated for a period of time or after the incubation has been completed, and a cleaning alignment position configured to move the reactor which needs to be cleaned and separated or the reactor which has been cleaned and separated in.

In some embodiments, when the plurality of groups of tests are performed in parallel, the following transfer operations may be needed.

The first transfer operation is that: the reactor which is vacant or after the sample has been discharged is moved from the supply disc 710 to the transit disc 520.

The second transfer operation is that: the reactor which needs to be incubated is moved from the transit disc 520 to the incubation position 422 of the reaction disc 410.

The third transfer operation is that: the reactor which needs to be cleaned and separated is moved from the incubation position 422 of the reaction disc 410 to the cleaning and separation position 421 of the reaction disc 410.

The fourth transfer operation is that: the reactor into which the second reagent needs to be added is moved from the incubation position 422 of the reaction disc 410 to the transit disc 520.

The fifth transfer operation is that: the reactor into which the second reagent needs to be added is moved from the cleaning and separation position 421 of the reaction disc 410 to the transit disc 520.

The sixth transfer operation is that: the reactor which needs to be measured is moved from the cleaning and separation position 421 of the reaction disc 410 to the measurement position 423 of the reaction disc 410.

The seventh transfer operation is that: the reactor containing the diluted sample is moved from the transit disc 520 to the dilution transport apparatus 900.

The eighth transfer operation is that: the reactor after measurement is moved from the measurement position 423 of the reaction disc 410 to the discard position.

In the above embodiments, the transfer apparatus 600 including the first grabbing unit 611 and the second grabbing unit 612 is provided. The fifth transfer operation transfers the reactor into which the second reagent needs to be added from the cleaning and separation position 421 of the reaction disc 410 to the transit disc 520. If the fifth transfer operation is only completed by the first grabbing unit 611, the motion displacement is large, when the first grabbing unit 611 performs operation, the second grabbing unit 612 also needs to avoid, and the two may not work in parallel, which affects the work efficiency of the transfer apparatus 600. Therefore, the fifth transfer operation is decomposed into two sub-operations which may be relayed: the fifth A transfer operation and the fifth B transfer operation. The fifth A transfer operation needs to transfer the reactor to the relay position 635 through the first grabbing unit 611 and place the reactor at the relay position, and the fifth B transfer operation grabs the reactor from the relay position to the transfer counter position 636 through the second grabbing unit 612. As shown in Fig. 6, the second grabbing unit 612 is responsible for the first transfer operation, the second transfer operation, the fourth transfer operation, the fifth B transfer operation, the seventh transfer operation and the eighth transfer operation, and the first grabbing unit 611 is responsible for the third transfer operation, the fifth A transfer operation and the sixth transfer operation.

In one of the embodiments, in a two-step test, the following transfer operations need to be sequentially performed.

The first transfer operation, the second transfer operation, the third transfer operation, the fifth transfer operation, the second transfer operation, the third transfer operation, the sixth transfer operation and the eighth transfer operation are sequentially performed. Therefore, the first transfer operation, the second transfer operation, the third transfer operation, the fifth transfer operation, the second transfer operation, the third transfer operation, the sixth transfer operation and the eighth transfer operation are sequentially completed by the following grabbing units: the second grabbing unit 612, the second grabbing unit 612, the first grabbing unit 611, the first grabbing unit 611, the second grabbing unit 612, the second grabbing unit 612, the first grabbing unit 611, the first grabbing unit 611 and the second grabbing unit 612.

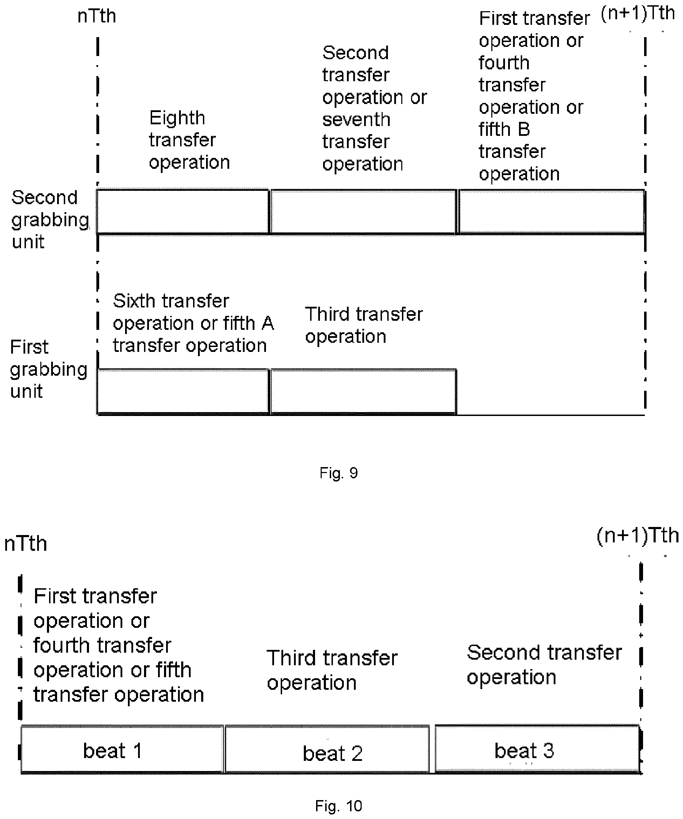

For the reactor transfer operation at the same functional station, the grabbing unit first removes the reactor in the station, and then moves another reactor, so that the usage efficiency of the functional station may be improved. Fig. 9 shows an execution action diagram of a grabbing unit in a certain cycle in an embodiment. In other embodiments, the execution action may be different from the state shown in Fig. 9. As shown in Fig. 9, the first transfer operation is that: the reactor which is vacant or after the sample has been discharged is moved from the supply disc 710 to the transit disc 520. The fourth transfer operation is that: the reactor into which the second reagent needs to be added is moved from the incubation position 422 of the reaction disc 410 to the transit disc 520. The fifth B transfer operation is that: the second grabbing unit 612 grabs the reactor from the relay position to the transit disc 520. Since all three are moved from other positions to the transit disc 520, and the transit disc 520 may only receive the reactor moved from one position at a time, the first transfer operation, the fourth transfer operation and the fifth B transfer operation are mutually exclusive.

For another example, as shown in Fig. 9, the second transfer operation is that: the reactor which needs to be incubated is moved from the transit disc 520 to the incubation position 422 of the reaction disc 410. The seventh transfer operation is that: the reactor containing the diluted sample is moved from the transit disc 520 to the dilution transport apparatus 900. Since both of them remove the reactor from the transit disc 520 to other positions, and the transit disc 520 may only move the reactor to another position at a time, the second transfer operation and the seventh transfer operation are mutually exclusive.

For yet another example, as shown in Fig. 9, the sixth transfer operation is that: the reactor which needs to be measured is moved from the cleaning and separation position 421 of the reaction disc 410 to the measurement position 423 of the reaction disc 410. The fifth A transfer operation is that: the reactor into which the second reagent needs to be added is moved from the cleaning and separation position 421 of the reaction disc 410 to the relay position. Since both of them transfer the reactor from the cleaning and separation position 421 of the reaction disc 410 to other positions (including different positions of the reaction disc 410), the cleaning and separation position 421 of the reaction disc 410 may only remove the reactor to another position at a time, so that the sixth transfer operation and the fifth A transfer operation are also mutually exclusive.

The above mutually exclusive transfer operations have the same station.

Herein, the specific work content of the transfer operation in the above Fig. 9 is just an example, and in other embodiments, the specific work corresponding to the transfer operation may not be the content listed in the above embodiment.

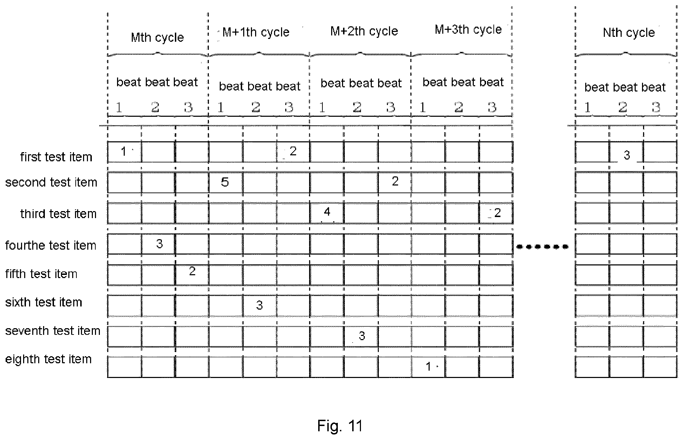

For still another example, Fig. 10 is an execution action diagram of a grabbing unit in a certain cycle in an embodiment when the transfer apparatus only has one grabbing unit. Fig. 11 is an execution action diagram of an embodiment shown in Fig. 10 when a plurality of tests are performed in parallel. In Fig. 10, the first transfer operation, the fourth transfer operation and the fifth transfer operation are mutually exclusive. Of course, the same transfer operation is also mutually exclusive. For example, the first transfer operation and the first transfer operation are mutually exclusive. The mutually exclusive transfer operations may not be performed at the same time in the same cycle. Herein, the first transfer operation, the second transfer operation, the third transfer operation, the fourth transfer operation and the fifth transfer operation in Fig. 10 are only a definition of names, and the specific operation contents are not limited by the above embodiments.

The specific steps of the reactor transfer method are now introduced with the embodiments shown in Fig. 10 and Fig. 11.

As shown in Fig. 10, each cycle T includes three continuous beats, namely a beat 1, a beat 2 and a beat 3. The first transfer operation, the fourth transfer operation and the fifth transfer operation may only be completed in the beat 1 in a certain cycle respectively. The third transfer operation may only be completed in the beat 2 in each cycle. The second transfer operation may only be completed in the beat 3 in each cycle.

In one of the embodiments, as shown in Fig. 11, the first to eighth test items in the Mth to Nth cycles are used as examples to illustrate the reactor transfer method with parallel tests. It is to be noted that the first to eighth test items are only the identification of the test items, and do not necessarily represent the actual test starting sequence. These items may be the same test item, or different test items or partially identical test items. The reactor transfer method includes a first test item, a second test item, a third test item, a fourth test item, a fifth test item, a sixth test item, a seventh test item, and an eighth test item which are executed in parallel. Each test item includes three continuous beats in each cycle. Each test item includes a plurality of transfers operations which are continuously performed.

The first test item at least includes the first transfer operation, the second transfer operation and the third transfer operation which are continuously performed. The first transfer operation may only be completed in the beat 1 in a certain cycle, the second transfer operation may only be completed in the beat 3 in each cycle, and the third transfer operation may only be completed in the beat 2 in each cycle.

The second test item at least includes the fifth transfer operation and the second transfer operation which are continuously performed. The fifth transfer operation may only be completed in the beat 1 in a certain cycle, and the second transfer operation may only be completed in the beat 3 in each cycle.

The third test item at least includes the fourth transfer operation and the second transfer operation which are continuously performed, and the fourth transfer operation may only be completed in the beat 1 in each cycle.

The fourth test item at least includes the third transfer operation, and the third transfer operation may only be completed in the beat 2 in each cycle.

The fifth test item at least includes the second transfer operation, and the second transfer operation may only be completed in beat 3 in each cycle.

The sixth test item at least includes the third transfer operation, and the third transfer operation may only be completed in the beat 2 in each cycle.

The seventh test item at least includes the third transfer operation, and the third transfer operation may only be completed in the beat 2 in each cycle.

The eighth test item at least includes the first transfer operation, and the first transfer operation may only be completed in the beat 1 in a certain cycle.

As shown in Fig. 10, the first transfer operation, the fourth transfer operation and the fifth transfer operation are mutually exclusive.

The first test item and the second test item are taken as an example for illustration, when the first test item and the second test item are executed at the same time, in each cycle of the first test item, whether the second test item has the transfer operation mutually exclusive with the first test item is determined. If the mutually exclusive transfer operations do not exist in the corresponding cycle, the first test item and the second test item are executed at the same time. If the mutually exclusive transfer operations exist in the corresponding cycle, when the first test item is executed, the situations that the second test item is executed after delaying one cycle each time are sequentially determined, and the second test item is executed until the second test item does not have the transfer operation mutually exclusive with the first test item in each cycle of the first test item. Specifically, when the first test item and the second test item are executed at the same time, in the Mth cycle of the first test item, the second test item has the fifth transfer operation and the first test item has the first transfer operation, and since the fifth transfer operation and the first transfer operation are mutually exclusive, at this time, the situation that the second test item is executed after delaying by one cycle is determined. As shown in Fig. 11, when the second test item is executed after delaying by one cycle, in the Mth cycle, the M+1th cycle, the M+2th cycle to the Nth cycle of the first test item, the second test item does not have the transfer operation mutually exclusive with the first test item in the corresponding cycle. Therefore, the second test item may be executed after delaying by one cycle relative to the first test item.

Similarly, the follow-up test items are also executed in this way. That is, the mutually exclusive transfer operations in the test items, which are finally realized by the reactor transfer method, do not exist at the same time in the same work cycle. Herein, the beats in different work cycles are overlapped. However, when the mutually exclusive transfer operations in the test items do not exist at the same time in the same work cycle, the following two situations exist.

The first situation is that: when the Xth test item and the Yth test item are executed at the same time, whether the Yth test item has the transfer operation mutually exclusive with the Xth test item in each cycle of the Xth test item is determined. If the mutually exclusive transfer operations do not exist in the corresponding cycle, the Xth test item and the Yth test item are executed in parallel.

The second situation is that: if the mutually exclusive transfer operations exist in the corresponding cycle, when the Xth test item is executed, the situations that the Yth test item is executed after delaying by one cycle each time are sequentially determined, and the Yth test item is executed until the Yth test item does not have the transfer operation mutually exclusive with the Xth test item in each cycle of the Xth test item. According to the above embodiment, the mutually exclusive transfer operations may share the same beat in different cycles, and do not exist at the same time in the same cycle. On the one hand, it is not necessary to arrange the beats for the mutually exclusive transfer operations in the same cycle, so that the cycle time is shortened and the test flux is improved. On the other hand, the mutually exclusive transfer operations may be realized in different cycles, so that once each test item is executed, it may not be interrupted due to the encounter of the mutually exclusive transfer operations, and it may be continuously executed.

According to the above embodiment, in other embodiments, the first test item, the second test item, the third test item, and the like which are sequentially performed may also be arranged. At this time, the reactor transfer method at least includes the first test item and the second test item which are successively performed. The first test item at least includes three transfer operations. The second test item at least includes three transfer operations, and the first test item and the second test item at least include the mutually exclusive transfer operations. The reactor transfer method includes the following steps.

In each execution cycle of the first test item, the beats of the transfer operations of the first test item are sorted according to the execution order, and the beats are the time periods needed by each transfer operation.

In each execution cycle of the first test item, the situations that when the second test item is executed after delaying by one execution cycle each time, whether the first test item and the second test item have mutually exclusive transfer operations in each beat of the first test item are sequentially determined. If the first test item and the second test item in the same beat have no mutually exclusive transfer operation, the second test item is executed.

In one of the embodiments, the beats of the mutually exclusive transfer operations are partially overlapped, and the beat is the time period needed by each transfer operation. For example, in one of the embodiments, as shown in Fig. 10, the beat of the first transfer operation is executed in the first second, and is completed in the fifth second. The beat of the fourth transfer operation is executed in the second second, and is completed in the seventh second. Then, the group of mutually exclusive transfer operations are overlapped between the second and fifth seconds.

In one of the embodiments, the beats of the mutually exclusive transfer operations are completely overlapped, and the beat is the time period needed by each transfer operation. For example, in one of the embodiments, as shown in Fig. 10, the beat of the first transfer operation is executed in the first second, and is completed in the fifth second. The beat of the fourth transfer operation is executed in the first second, and is completed in the fifth second. Then, the beats of this group of mutually exclusive transfer operations are completely overlapped.

In one of the embodiments, the mutually exclusive transfer operations at least have the same operation station. For example, for the reactor transfer operations at the same functional station, one of the transfer operations is to move one reactor into the station through the grabbing unit, and the mutually exclusive transfer operation is to move the other reactor into the station through the grabbing unit. Since the station may only enable one reactor to move in at a time, the two transfer operations are mutually exclusive.

In some embodiments, the above transfer operation may be completed by the transfer apparatus, and the transfer apparatus 600 includes the first grabbing unit 611 and the second grabbing unit 612. In some embodiments, the transfer apparatus 600 may further include one grabbing unit. When the transfer apparatus 600 includes the first grabbing part 611 and the second grabbing part 612, the transfer trajectories of the first grabbing part 611 and the second grabbing part 612 are at least partially overlapped. Herein, the overlapped transfer trajectories cover at least two stations. For example, as shown in Fig. 6, the incubation alignment position 632, the measurement alignment position 633, the discard alignment position 634 and the relay alignment position 635 are overlapped, and the transfer trajectory of the corresponding overlapped portion covers the incubation position 422, the measurement position 423, the discard position and the relay position.

In one of the embodiments, the covered station at least includes the relay position, the first grabbing unit 611 grabs the reactor to the relay position, and then the second grabbing unit 612 transfers the reactor from the relay position to other positions, so as to transfer the reactor on the two sides of the relay position.

In one of the embodiments, the covered station further includes the incubation position 422 and the measurement position 423. In one of the embodiments, the covered station further includes the incubation position 422 or the measurement position 423.

The technical features of the above-described embodiments may be arbitrarily combined. For the sake of brevity of description, all possible combinations of the technical features in the above embodiments are not described. However, as long as there is no contradiction between the combinations of these technical features, all should be considered as the scope of this description.

The above embodiments are merely illustrative of several implementation modes of the present invention with specific and detailed description, and are not to be construed as limiting the patent scope of the present invention. It is to be noted that a number of variations and modifications may be made by those of ordinary skill in the art without departing from the conception of the present invention, and all fall within the scope of protection of the present invention. Therefore, the scope of protection of the present invention should be determined by the appended claims.

## Claims

1. A dilution method, comprising:
adding a sample into a first reactor at a first station (11) of a supply unit (700);
transferring the first reactor to a fifth station (15) of a transit apparatus (500), and receiving a second reactor at the first station (11) of the supply unit (700);
adding a diluent into the first reactor at the fifth station (15) to obtain a diluted sample;
uniformly mixing the diluted sample in the first reactor;
transferring the first reactor from the transit apparatus (500) to a dilution transport apparatus (900);
transferring part of the diluted sample in the first reactor on the dilution transport apparatus (900) to the second reactor on the supply unit (700);
transferring the second reactor to the fifth station (15) of the transit apparatus (500), and continuing to add a reagent into the second reactor; and
uniformly mixing substances in the second reactor.

2. The dilution method as claimed in claim 1, wherein the supply unit (700) comprises a supply disc (710), a temporary storage tank (720) configured to contain the reactor being formed in the supply disc (710), and the supply disc (710) rotating to drive the temporary storage tank (720) to move circularly at the first station (11) and the second station (12).

3. The dilution method as claimed in claim 1, wherein the transit apparatus (500) comprises a transit disc (520), a temporary storage position (530) configured to contain the reactor being arranged on the transit disc (520), and the transit disc (520) driving the temporary storage position (530) to rotate circularly at the fourth station (14) and the fifth station (15).

4. The dilution method as claimed in claim 3, wherein the reactor receives the diluent at the fifth station (15), and performs uniform mixing operation at the fifth station (15).

5. The dilution method as claimed in claim 3, wherein the transit disc (520) drives the temporary storage position (530) to rotate circularly at the fourth station (14), the fifth station (15) and a sixth station (16).

6. The dilution method as claimed in claim 5, wherein the reactor receives the diluent at the fifth station (15) and performs uniform mixing operation at the sixth station (16).

7. The dilution method as claimed in claim 1, wherein the dilution method further comprises a step of discarding the first reactor after transferring part of the diluted sample in the first reactor to the second reactor.

8. A dilution apparatus, comprising:
a supply unit (700), the supply unit (700) comprising a supply disc (710), a temporary storage tank (720) configured to contain a reactor being formed in the supply disc (710), and the supply disc (710) rotating to drive the temporary storage tank (720) to move circularly at a first station (11) and a second station (12);
a transit apparatus (500), the transit apparatus (500) comprising a transit disc (520), a temporary storage position (530) configured to contain the reactor being arranged on the transit disc (520), and the transit disc (520) rotating to drive the temporary storage position (530) to move circularly at a fourth station (14) and a fifth station (15);
a dilution transport apparatus (900), configured to transport the reactor after the diluted sample; and
a sample supply apparatus (200), configured to transfer the diluted sample in the reactor on the dilution transport apparatus (900) to the reactor on the supply unit (700).

9. The dilution apparatus as claimed in claim 8, wherein the dilution apparatus further comprises a transfer apparatus (600) configured to transfer the reactor between the supply unit (700) and the transit apparatus (500).

10. The dilution apparatus as claimed in claim 8, wherein the dilution apparatus further comprises a reagent supply apparatus (100) configured to add a diluent into the reactor.

11. The dilution apparatus as claimed in claim 9, wherein the transfer apparatus (600) comprises a guide rail (630) and a grabbing unit moving along the guide rail (630).

12. The dilution apparatus as claimed in claim 11, wherein one guide rail (630) is arranged, at least two groups of the grabbing units are arranged, and the at least two groups of the grabbing units are sequentially arranged along the extension direction of the guide rail (630).

13. The dilution apparatus as claimed in claim 9, wherein the dilution apparatus further comprises a reaction apparatus (400), the dilution transport apparatus (900) being independently arranged between the reaction apparatus (400) and the transit apparatus (500) and moving linearly between the transfer apparatus (600) and the sample supply apparatus (200).

14. The dilution apparatus as claimed in claim 13, wherein the dilution transport apparatus (900) is provided with at least two carrying positions configured to carry the reactor containing the diluted sample.
